**Europäisches Patentamt**

**European Patent Office**

**Office européen des brevets**

(19)

(11) Veröffentlichungsnummer: **0 237 469 B1**

(12) # EUROPÄISCHE PATENTSCHRIFT

(45) Veröffentlichungstag der Patentschrift: **20.03.91**

(51) Int. Cl.5: **H01G 1/13, B23K 26/14**

(21) Anmeldenummer: **87810017.1**

(22) Anmeldetag: **13.01.87**

(54) **Kondensatorfolie aus Aluminium oder einer Aluminiumlegierung.**

(30) Priorität: **31.01.86 CH 388/86**

(43) Veröffentlichungstag der Anmeldung:
**16.09.87 Patentblatt 87/38**

(45) Bekanntmachung des Hinweises auf die
Patenterteilung:
**20.03.91 Patentblatt 91/12**

(84) Benannte Vertragsstaaten:
**CH DE FR GB IT LI SE**

(56) Entgegenhaltungen:
**EP-A- 0 201 383**
**CH-A- 272 404**
**DE-A- 2 743 544**
**DE-B- 1 160 103**

(73) Patentinhaber: **ALUSUISSE-LONZA SERVICES
AG**
**Feldeggstrasse 4**
**CH-8034 Zürich(CH)**

(72) Erfinder: **Baur, Rudolf**
**Bündtweg 12**
**CH-8280 Kreuzlingen(CH)**
Erfinder: **Kern, Markus**
**Zihlstrasse 8**
**CH-8280 Kreuzlingen(CH)**

**Beschreibung**

Die Erfindung bezieht sich auf eine Kondensatorfolie aus Aluminium oder einer Aluminiumlegierung der im Oberbegriff des Anspruchs 1 genannten Art.

Eine derartige Kondensatorfolie ist bereits durch die japanische Patentanmeldung 55 030 813 bekannt.

Durch den Schnitt mit einem LASER-Strahl wird die Schnittkante der Metallfolie gerundet, wodurch die beim Schneiden mit mechanischen Schneidwerkzeugen, insbesondere Zirkularmessern, unvermeidbare Brauen- und Rissbildung an der Schnittkante der Metallfolie, die die maximal erreichbaren Nennspannungen der aus solchen Folien gefertigen Kondensatoren aufgrund starker Feldstärkeerhöhungen herabsetzen, wesentlich eingeschränkt wird. Die Feldstärkeerhöhungen belasten nämlich lokal das Dielektrikum sehr stark, was zu einem vorzeitigen Ausfall des Kondensators führt. Dadurch ist keine optimale Ausnützung des Kondensatordielektrikums möglich.

Obwohl die hohe Qualität der heute erzeugbaren Dielektrika sehr hohe Nennfeldstärken der Kondensatoreinheiten erlauben, ist man bestrebt, durch weitere Massnahmen an den Kondensatorwerkstoffen die Nennfeldstärke weiter zu erhöhen.

Aufgabe der vorliegenden Erfindung ist es, eine Kondensatorfolie der eingangs genannten Art bereit zu stellen, die eine zusätzliche Erhöhung der Nennfeldstärke bei Kondensatoren ermöglicht. Dies soll insbesondere dadurch bewerkstelligt werden, dass die Streuung der Feldstärke im Kantenbereich der Folie reduziert wird, um damit die punktuell auftretende Belastung des Dielektrikums einzuschränken.

Erfindungsgemäss wird die gestellte Aufgabe durch eine Kondensatorfolie gelöst, welche sich nach dem Wortlaut des Anspruchs 1 auszeichnet.

Im Rahmen der Erfindung soll "umspült" bedeuten, dass die Luftatmosphäre in nächster Umgebung des LASER-Strahls durch das sauerstoffhaltige Gas verdrängt wird, so dass der LASER-Strahl vom reaktiven Gas eingehüllt ist und dieses, während der Erzeugung der (Schnitt-)Kante, mit der Folie in Wirkkontakt tritt.

Es wird angenommen, dass durch den mit einem Gas, welches einen über dem Sauerstoffgehalt der Luft liegenden Sauerstoffgehalt aufweist, umspülten LASER-Strahl eine erheblich dickere Oxidschicht im Schnittkantenbereich der Folie als sonst ohne diese Massnahme erzeugt wird, was zur Folge hat, dass sich freie Ionen im Randbereich an die Oxidschicht anlagern und damit gebunden werden, womit deren schädliche Wirkung beseitigt ist.

Eine vorteilhafte Weiterbildung des erfindungsgemässen Verfahrens ist durch die Merkmale des Anspruche 2 gekennzeichnet.

**Ansprüche**

1. Verfahren zur Herstellung einer Kondensatorfolie aus Aluminium oder einer Aluminiumlegierung, bei der wenigstens eine Kante durch einen LASER-Strahl geschnitten wird, dadurch gekennzeichnet, dass der LASER-Strahl von einem das, dessen Sauerstoffgehalt über dem der Luft liegt, umspült wird, sodaß es mit der kondensatorfolie in Wirkkontakt tritt.

2. Verfahren nach Anspruch 1, dadurch gekennzeichnet, dass mindestens eine Kante durch einen mit reinem Sauerstoff umspülten LASER-Strahl erzeugt wird.

**Claims**

1. Method of producing an aluminium or aluminium alloy capacitor foil, in which at least one edge is cut by a LASER beam, characterized in that the LASER beam is bathed by a gas whose oxygen content is greater than that of the air, so that it comes into active contact with the capacitor foil.

2. Process according to Claim 1, characterized in that at least one edge is produced by a LASER beam bathed with pure oxygen.

**Revendications**

1. Procédé de fabrication d'une feuille pour condensateur en aluminium ou en alliage d'aluminium, dans laquelle au moins une arête est découpée par un faisceau laser, caractérisé en ce que le faisceau laser est baigné par un gaz dont la teneur en oxygène est supérieure à celle de l'air, de sorte qu'il entre en contact actif avec la feuille pour condensateur.

2. Procédé selon la revendication 1, caractérisé en ce qu'au moins une arête est formée par un faisceau laser baigné par de l'oxygène pur.